# EUROPEAN PATENT SPECIFICATION

(11) **EP 1 240 623 B1**
(45) Date of publication and mention of the grant of the patent: **26.07.2006**
(21) Application number: 00983423.5
(22) Date of filing: 22.12.2000
(51) Int. Cl.: G06T 17/00

(54) **SYSTEM AND METHOD FOR VISUALIZING PERSONAL APPEARANCE**
SYSTEM UND METHODE ZUR VISUALISIERUNG DER PERSÖNLICHEN ERSCHEINUNG
SYSTEME ET PROCEDE PERMETTANT DE VISUALISER L'ASPECT PHYSIQUE D'UNE PERSONNE

(30) Priority: 22.12.1999 GB 9930448
(43) Date of publication of application: 18.09.2002
(73) Proprietor: Bodymetrics Limited, St. Albans, Hertfordshire AL1 5HE (GB); UNIVERSITY COLLEGE LONDON, London WC1E 6BT (GB)
(72) Inventor: GOONATILAKE, Suran, Asitha, London WC1A 2LP (GB); TRELEAVEN, Philip, Colin, London SW18 1PX (GB); WALTERS, Jonathan, Ipswich 1P4 4EE (GB); LAWRENCE, Kelvin, David, Ipswich 1P5 2FG (GB); CHRYSANTHOU, Yiorgos, 1080 Nicosia (CY); BUXTON, Bernhard, Francis, Lewes, East Sussex BW7 1HT (GB); VASSILEV, Tzvetomir, Ivanov, 7000 Rousse (BG); THOMPSON, Giles, London E17 5LB (GB); SPANLANG, Bernhard, London MW3 2XB (GB)
(74) Representative: Pratt, David Martin
(86) International application number: PCT/GB2000/004990
(87) International publication number: WO 2001/046911

(56) References cited:
- WO-A-99/23609
- US-A- 4 539 585
- US-A- 5 850 222
- US-A- 5 937 081

## Description

### BACKGROUND OF THE INVENTION

### Field of the Invention

The present invention relates to system and method for visualizing appearances of wearing apparel and providing size and fit recommendations for ready-to-wear clothing. More particularly, the invention is directed to visualizing the appearance of a person with wearing apparel and providing intelligent feedback and designer recommendations relating to best fit and individual customer "looks."

Although certain people enjoy shopping for apparel, surveys have indicated that many people browsing for clothing do not necessarily like trying them on in stores. Moreover, due to increasing concentrations in population centers and crowding at shopping malls a trend exists with respect to shopping "online." However, it has been found that consumers shopping from home do not have a high level of confidence when purchasing apparel remotely because of concerns about how the garment will look on them and which size they should buy. Therefore, consumers shopping from home often order more than one size and/or style of a particular garment, to ensure that they will receive at least one piece of the garment that will fit and be pleasing in appearance when worn, and return the rest. In certain instances, this process might involve more than one iteration.

At the present time, there are no national or global size standards for apparel that retailers uniformly accept. Even within a single retail store, garments that are given the same size designator by designers can vary considerably in the actual size and fit on a consumer. Consequently, consumers cannot easily rely upon the fact that since they have purchased a particular size garment from one store/manufacturer that they can purchase the same size from another store/manufacturer and expect the item to fit.

For tailored goods, fit is uniquely assured to the specific purchaser, however, tailoring all goods is usually not practical and is cost prohibitive across the mainstream. Accordingly, wearing apparel is often mass manufactured where hundreds of units of a garment are mass produced in accordance with a single size or pattern. In this, commercial cutting tables are employed where hundreds of stacked sheets of cloth are vacuum drawn into a hard, compact mass. A pattern, template or computer program is then used to drive a cutting saw that cuts hundreds of garment segments or panels at one time. The individual components or panels are then machine sewn together to fabricate hundreds of essentially identical garments in an economical manner.

While the foregoing system enables garments to be mass produced, attempting to select the right sized garment for a specific wearer can be a challenge to the retail industry.

For the reasons discussed above, retailers/manufacturers have found that there are significant costs associated with apparel that is returned by consumers because the consumers are dissatisfied by the fit and/or look of the garment when worn. On average, around 33% of returned apparel are returned due to the size of the garment being wrong. This volume of returns, together with the cost of handling each return, represents a substantial cost for an average sized retailer.

The Internet, virtual reality, and other technological advances in the apparel industry have spurred systems for virtual personal imaging. In particular, online shopping has generated increased interest in the apparel industry for systems and methods that provide personal visualization. There are, however, certain impediments to purchasing clothing online, such as limitations on sizing and visualization information over the Internet, which inhibit the migration of apparel sales from "brick-and-mortar" outlets to the Internet. Also, as discussed above, the retail apparel sector lacks a unified sizing standard in that what one retailer may designate as size 12, for one designer, might correspond to size 14 for another. This designer variation exacerbates the difficulty of online shopping.

To address the needs of online shopping, new technologies have been developed which capture body shape and allow a consumer to virtually try on clothing, i.e., virtual shopping. Such technologies include two-dimensional/three-dimensional virtual shopping using personal mannequins and three-dimensional body scanners that automatically capture body size and shape.

Personal mannequins are online representations of the human body in a general form that conforms, to varying degrees, to the sizing specifications and visual features of the consumer. Personal mannequins are available in two-dimensional models and three-dimensional models. Consumers can paste clothing onto these mannequins to obtain visual impressions of themselves, or an aspirational view of themselves, wearing the clothing. While such systems and methods are in use to a degree, in general they are selective and proprietary in nature, and consumers can only virtually try on products from a particular retailer that offers the mannequins. Additionally, previously known systems typically are in-store experiences or, when available over the Internet, offer only basic functionality.

Generally, body scanning uses a three-dimensional scanner kiosk in which a person's body shape can be captured in I to 7 seconds. High resolution data totalling over 100,000 points may be sampled approximately every 5mm over the body, each accurate to a few millimetres. This information is then used to obtain accurate sizing information for the purchase of off the-rack, mass-produced or customised clothing. At least one Japanese manufacturer, Hamamatsu Photonics, and a French company, Telmat, provide such three-dimensional body scanners. University College of London in the United Kingdom has developed an electronic tape measure system based on artificial intelligence techniques to extract body measurements automatically from a subject without pre-placing body landmarks. To the applicant's best information, the Hamamatsu scanner and tape measure were discussed in "3D Human Body Modelling from Range Data", I Dekker, PhD thesis, Department of Computer Science, University College, London, 2000. Information about these technologies can presently be seen at the website http://cat1.hpk.co.jp/Eng/catalog/sys/BL.pdf.

Recently, there has also been an increasing interest in improving the fitting of clothing, both by the introduction of mass-customisation into new areas of the apparel industry and through national sizing surveys undertaken to improve the sizing of mass-produced clothing. Mass-customisation involves the selection of the best fitting garments from an extended size range. In this, clothing manufacturers are starting to explore mass-customisation techniques to improve and effectuate customisation of mass-produced apparel using the technologies discussed above. National sizing surveys, directed towards ends such as better fitting off-the-rack clothing and improved design, are a major motivation for the deployment of three-dimensional scanners.

Although online shopping and related technology and sizing trends are discernible in the apparel industry, existing online shopping and sizing solutions are incomplete and inaccessible to the majority of consumers. Virtual shopping offerings at present are largely either entertainment or experimental, and the vast majority of retailers are not currently able to offer such a service. In order to capture the sizing and visualisation benefits of personal mannequin and body scanning technology and provide users with a complete online shopping experience, what is needed is an open, globally accessible scheme where shoppers can utilise a single source of their body information and try on and purchase clothing from a large number of sizes from many different retailers.

Typically, when a designer designs a garment the designer has a "look" in mind when the garment is worn by a consumer. In order for the garment to then fit a consumer with the designer "look", the body type or dimensions of the consumer and dimensions of the garment worn by the consumer have to be considered. Therefore, it is common for designers to use a standard body size for assembling components of a garment so that they are able to visualise the look of the garment as it is draped on the model. In the context of mass produced garments, it is impossible for consumers to avail of the skill and knowledge of a designer in a personalised manner to advise the consumer as to the "best fitting" size of a garment for the consumer, as deemed by the designer of the garment.

A known computerised virtual dressing room system ("VDRS") for displaying clothing on a rendered image of a human body is described in US-A-5850222. The VDRS receives contour lines defining a 3D shape of the human body, and points defining a 2D shape of clothing. The system discloses adjustment of the points of the clothing to corresponding points on a contour line of the human body. The VDRS renders the shape of the human body on a display device and the adjusted 2D shape of the clothing on the display device to effect the display of the human body wearing the clothing.

Another known image composition system (US-A-5937081) includes a display device coupled with a central processing device for displaying a user selected image. A camera coupled to the central processing device enables a real subject to be incorporated into the user selected image. Accessory items are stored in a memory device coupled to the central processing unit for combining with the subject in the user selected image.

Accordingly, it would be desirable to provide a system and method for visualising aspirational or real appearances based upon pre-defined characteristic features of a person with intelligent feedback related to clothing size, which recommends a correct size of clothing for a person regardless of sizing designations used by retailers/manufacturers. In this, it would be highly desirable to provide customers with size recommendations that deliver size advice of a garment designer/manufacturer to a customer and identify a correct size of a garment for a customer based upon predetermined weighting that is assigned to relevant dimensions of a garment by a designer. In addition, it would be desirable to be able to take into consideration end user preferences for loose or tight fit and to integrate customer fit preferences and purchase history.

The difficulties, limitations and desires suggested in the preceding are not intended to be exhaustive, but rather are among many which demonstrate that prior art systems and methods for visualizing personal appearance will admit to worthwhile improvement.

### OBJECTS OF THE INVENTION

It is, therefore, a general object of the invention to provide an improved system and method for visualizing aspirational or real appearance of a person, which will obviate or minimize difficulties of the type previously described.

It is another general object of the invention to provide an improved system and method for visualizing personal appearance based upon characteristic or aspirational features of a person derived from various sources.

It is a specific object of the invention to provide a system and method for visualizing appearance having easy and global accessibility.

It is another specific object of the invention to provide a system and method for visualizing personal appearance having a comprehensive infrastructure and an open standard protocol to store and transport characteristic personal information of a user.

It is yet another specific object of the invention to provide a system and method for visualizing aspirational or real appearance of a person using personal information.

It is another specific object of the invention to provide a system and method for three-dimensional visualization of personal appearance.

It is another specific object of the invention to provide a system and method for visualization of personal appearance with a garment being configured to fit on a virtual mannequin.

It is another specific object of the invention to provide a system and method for visualization of personal appearance with fit information and sizing recommendations for a garment being provided based upon predetermined fit criteria.

It is another specific object of the invention to provide a system and method for using a two-dimensional or three-dimensional visualization of a consumer item and transforming the image, in virtual reality, to fit on a two-dimensional or three-dimensional model of a person.

It is yet another specific object of the invention to provide a system and method for making buying recommendations to a person based upon the person's size measurements and predefined criteria of a consumer item under consideration with feedback based on a user's preferences and history.

### SUMMARY OF THE INVENTION

The invention is defined by the appended claims.

### DRAWINGS

Other objects and advantages of the present invention will become apparent from the following detailed description of preferred embodiments thereof taken in conjunction with the accompanying drawings, wherein:
FIGURE 1 shows schematically a system for visualizing personal appearance according to a preferred embodiment of the present invention;
FIGURE 2 is another schematic depiction of the system of Figure 1 showing various devices for accessing the system;
FIGURE 3 is yet another schematic depiction of the system of Figure 1 showing various functionalities of the system;
FIGURE 4 shows another schematic representation of the system of Figure 1 with a visualization engine and a sizing engine according to a preferred embodiment of the present invention;
FIGURE 5 is a schematic depiction of the database of the system of Figure 1 according to a preferred embodiment of the present invention;
FIGURE 6 is a schematic depiction of a personal wardrobe of the system of Figure 1 according to a preferred embodiment of the present invention;
FIGURE 7 shows in a flowchart a method for visualizing personal appearance according to a preferred embodiment of the present invention;
FIGURE 8 is a flowchart depicting two-dimensional visualization according to the method of Figure 7;
FIGURE 9 (note sheet 2/13) shows schematically a first transformation step in a two-dimensional fit of a garment image on a mannequin according to the visualization method of Figure 8;
FIGURE 10 (note sheet 9/13) shows schematically a second transformation step in a two-dimensional fit of a garment image on a mannequin according to the visualization method of Figure 8;
FIGURE 11 (note sheet 10/13) is a flowchart representing a method for providing size recommendations for clothing according to a preferred embodiment of the present invention;
FIGURE 12 (note sheet 9/13) shows a category size table of best fitting body sizes for a set of garments according to the method of Figure 11;
FIGURE 13 (note sheet 11/13) shows a size recommendation table for a set of garments according to the method of Figure 11;
FIGURE 14 (note 12/13) is another schematic depiction of the system of Figure 1 for showing input of data and feedback according to a preferred embodiment of the present invention;
FIGURE 15 (note again sheet 11/13) is a depiction of a virtual shopping window according to a preferred embodiment of the present invention; and
FIGURE 16 (note sheet 13/13) is a depiction of a web site based button for accessing the present system and method for visualizing personal appearance according to a preferred embodiment of the present invention.

### DETAILED DESCRIPTION

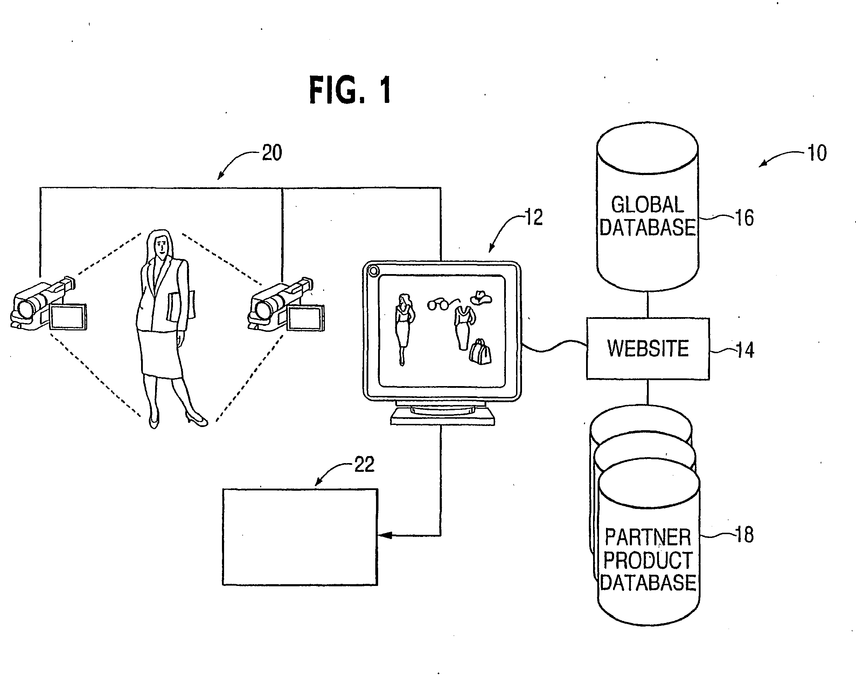

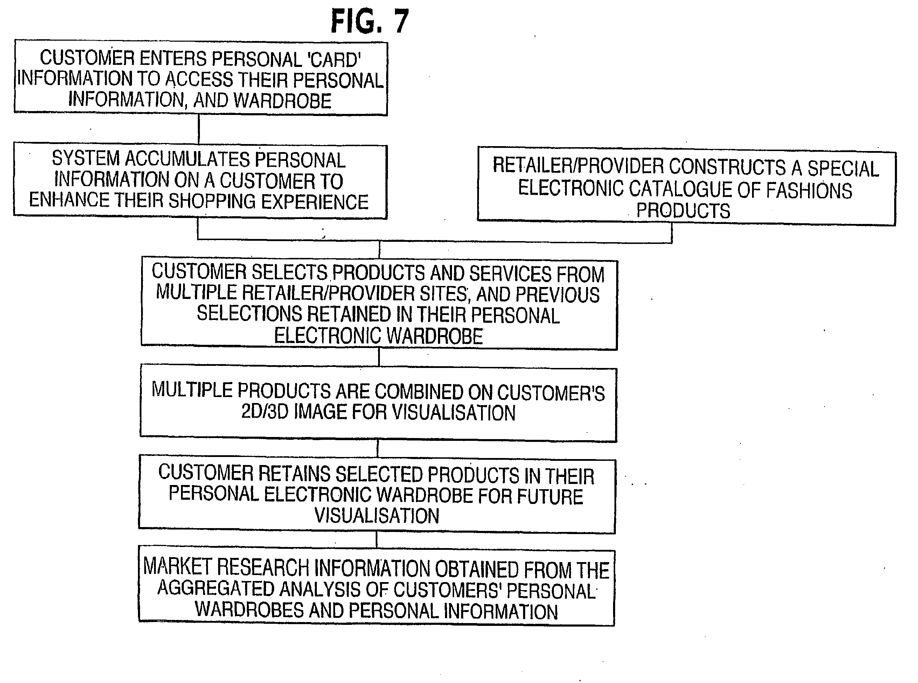

Figure 1 discloses a system 10 according to the present invention for using personal information of a user in connection with electronic fashion shopping visualization, for example, by a programmable computer, Internet, interactive television, electronic kiosk, cellular phone, CD-ROM, or other electronic media. Figure 7 represents in a flowchart a method according to the present invention for accumulating personal information related to a person and using the information in electronic shopping, for example, by a programmable computer, Internet, interactive television, electronic kiosk, cellular phone, CD-ROM, or other electronic media.

As used herein, "personal information" and/or "body information" may comprise aspirational or real two-dimensional or three-dimensional body images, two-dimensional or three-dimensional body shape and size, personal characteristics and/or other personal preferences of a user of the system 10. As also used herein, a "personal mannequin" may be a virtual model used for purposes of visualizing appearances. A user may select a model from various choices, aspirational and/or real, provided by the system or may provide their own model. The system 10 also provides functionality for a user to interact with various electronic catalogues and sites spanning fashions products to visualize their combined effect on the user's personal appearance.

Although the present disclosure describes the invention as having applications in fashion shopping over the Internet, the description as set forth herein is not intended to limit the scope of the invention, limited only by the appended claims. A traditional fashion shopping experience comprises the following elements: (i) the selection of products from multiple retailers, (ii) the trying on of products to verify sizing and visual appeal, and (iii) the assimilation of acquired products into a personal wardrobe. In order to replicate this experience online, in the present invention the physical presence of the individual and the individual's wardrobe is replaced by a universal record. A user's universal record includes the individual's shape, sizing and visual appearance data, the individual's online representation, i.e., a model or personal mannequin having much of the individual's sizing and visual appearance data and/or aspirational characteristics, and the individual's online personal wardrobe. The universal record constitutes a single source of personal information and enables purchasers of apparel to try on in virtual reality products from a large number of retailers. Similarly, it is envisioned that other instances may arise wherein personal visualization of this type is necessary or desirable. Such other instances would also fall within the scope of the present invention as claimed.

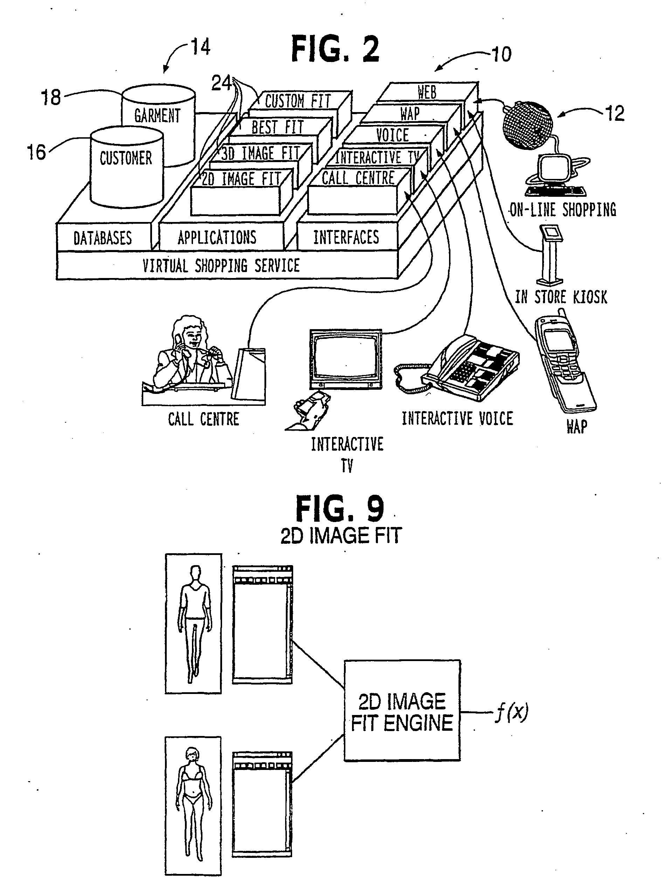

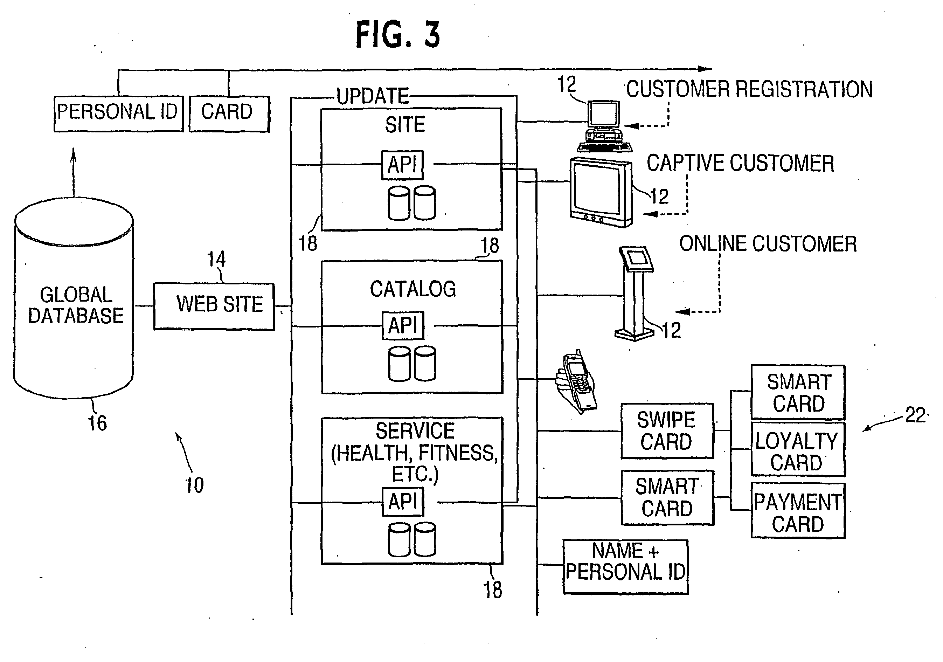

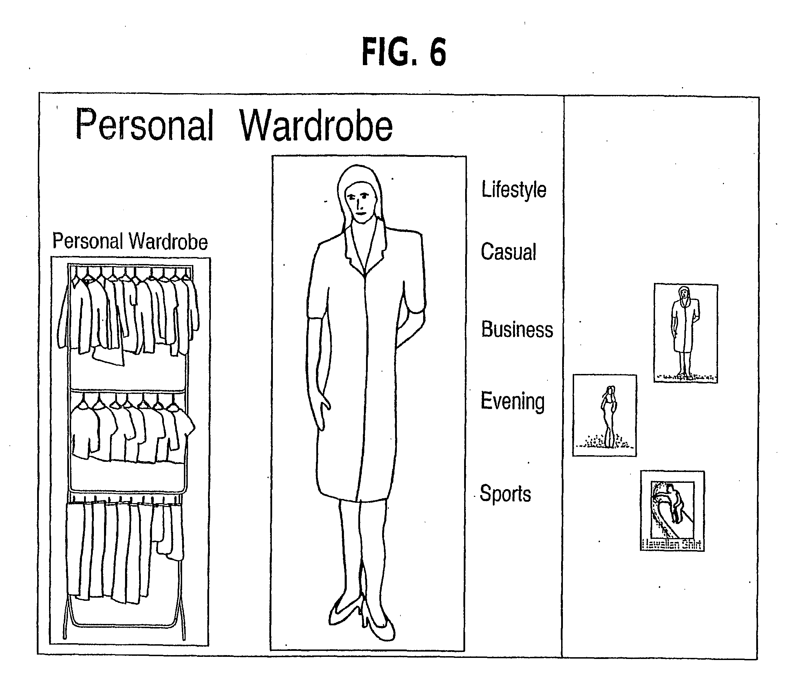

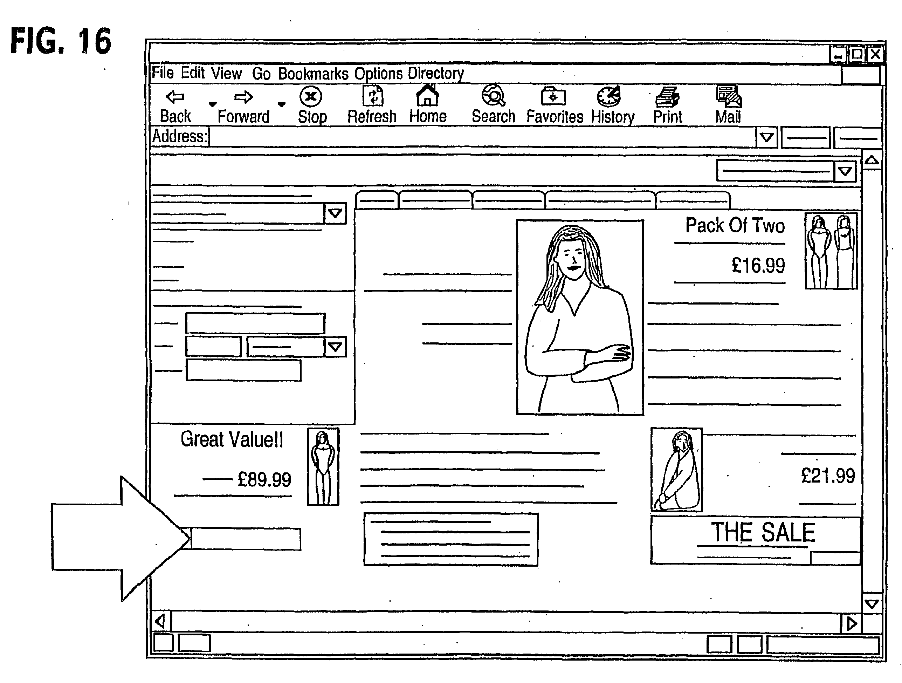

Referring to Figure 1, the system 10 may be accessed through a web-enabled device 12 for users to download their personal body data, virtually try a retailer's products on their mannequin, and store the products and images in their own personal virtual wardrobes (see also Figures 6 and 15). Web-enabled devices 12 include personal computers, in-store terminals, interactive television, third-generation (3G) mobile devices, and wireless application protocol enabled devices, such as mobile phones and personal digital assistants (see also Figures 2 and 3).

As depicted in Figures 1 to 3, by means of the device 12 a user communicates with a database 14 and additional parts of the system 10. The database 14 may be accessed through a web site or other similar access node (see also Figure 16). The database 14 includes a global database 16 for storing personal information of users as universal records and partner product databases 18 for storing data about retailers' products which can be accessed by means of the system 10. Figure 2 is another schematic representation of the system 10 with various devices 12 for accessing the system 10.

Referring to Figure 1, as one alternative, a person may obtain their body information by utilizing a store or health club/center having a scanning facility 20, which can produces a two-dimensional or three-dimensional image of the person's body shape. The image may be stored initially in an in-store system (not shown) and, provided that the person is satisfied with the image, may be transferred to the global database 16, via the device 12, to form a part of a universal record of the person. The person is then given a receipt 22, preferably in the form of a magnetic card or smart card with an associated personal identification number (PIN), or may use an existing card, to securely access their universal record. A visual representation of the person may be achieved using cameras or a full body scanning apparatus.

The device 12 provides the user with access to clothes and other products stored in product databases 18. The clothes may be applied to a visual representation of the user, aspirational or real, with the correct size of a garment, so that the user can view in virtual reality what the model looks like when wearing the clothes. Furthermore, if products from a partner retail outlet need to be accessed, so that the user can evaluate whether products from two different retail outlets will match, these may be accessed, via the database 14, which is connected to all the partner product databases 18. In a computer, point-and-click movements can be effected by the user, thereby copying clothes from a virtual wardrobe (note Figure 15) for application to the virtual image for assessment purposes.

If the user selects a garment for visualization or purchase, details of the garment may be stored in a personal wardrobe associated with the user in the global database 16 as part of the user's universal record. If the user wishes to review his/her wardrobe of garments at home, for example, this may be achieved by accessing the database 14, using the device 12, and the user's personal name and personal identification number, to review the clothes in the personal wardrobe stored in the global database 16 (note Figure 3). When the user decides to purchase a particular garment, a link is available (note Figure 15) to take the user to the relevant retail web site or electronic catalog where the purchase transaction can be completed. The garment can then be shipped to the user's home address, or any other appropriate venue. In an in-store version of the above description, the user may access visualization and size advice from an in-store kiosk, for example, before purchasing the item at a checkout counter.

Detailed body features and dimensions of a user may be recorded in the global database 16 as a part of the user's universal record for future use. Further, photo-realistic or aspirational two-dimensional or three-dimensional aspirational or real representations of the user can be viewed on a computer screen, for example, with any number of different garments applied to the virtual model. Furthermore, garments from a variety of different retail outlets can be viewed together in this way.

Referring to Figure 3, the system 10 according to the present invention may be used by a captive customer in a retail outlet, for example, or an on-line customer accessing a web site, for example. In either event, some form of identification will be needed so that the user's universal record can be accessed from the global database 16. Swipe cards or smart cards 22 may be used for this purpose, and these could take the form of a loyalty card or a payment card, for example.

A universal record relating to a person stored in the global database 16 may include personal body data comprising a color body image of the individual in two dimensions or three dimensions, a whole three-dimensional body profile of the individual providing shape and size information, a personal mannequin of the user, and a personal wardrobe having color product images in two dimensions or three dimensions and associated retail information. As discussed above, the personal mannequin may be based on real or aspirational body features for purposes of visualization with garments.

A personal virtual shopping window, such as shown in Figures 6 and 15, may contain the person's personal mannequin, personal body data, personal information, personal wardrobe and fashion brand preferences. Personal virtual shopping windows may be accessible by means of cards 22, and uniformly and globally accessible via any web-enabled device 12, such as personal computers, electronic kiosks and televisions, either in-store or at home, and via wireless application protocol enabled devices. Garments in the personal wardrobe may be highlighted and thereby applied to the personal mannequin, so that the user can assess in virtual reality whether the product is to their liking.

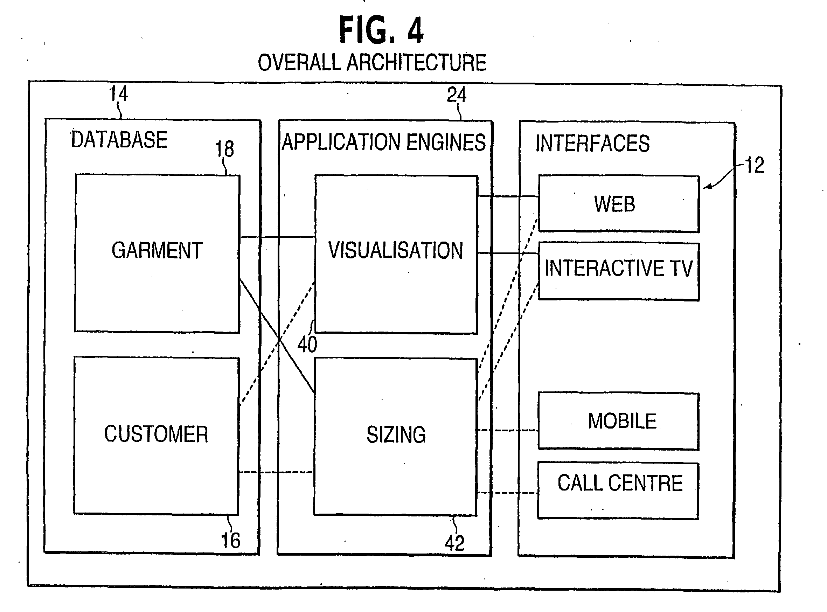

The system 10 provides various functionality by allowing an end consumer to access applications 24 (note Figure 2) which take, from the database 14, the user's personal data and the data relating to a product under consideration. Referring to Figure 4, the system 10 provides a user with visualization of a model wearing a garment by means of a visualization engine 40 and/or with advice on which size garment the user should buy by means of a sizing engine 42. Preferably, these functionalities are provided via a number of application engines 24. These applications 24 are combined by the system 10 to provide a virtual shopping service. The resulting information is delivered to the user via a number of interfaces 12 (note Figures 3 and 4).

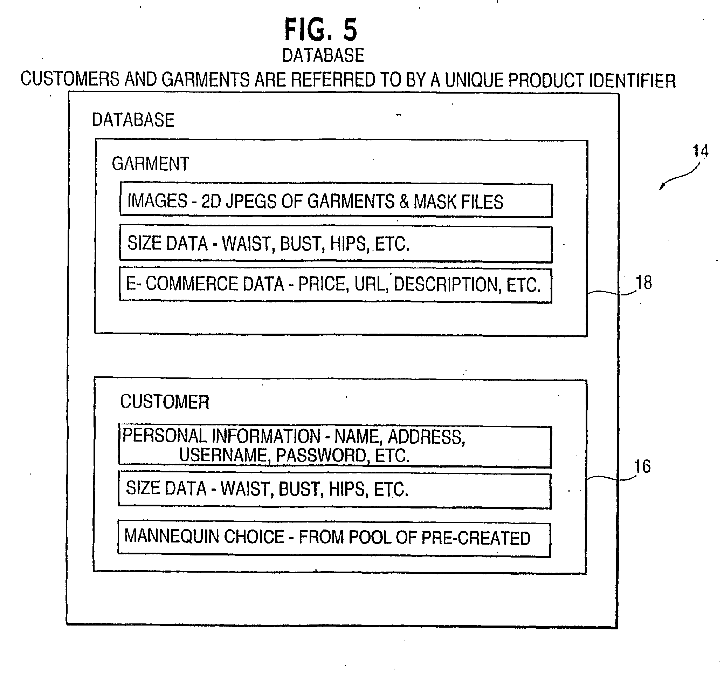

Referring to Figure 5, the database 14 comprises two databases, the product database 18 containing product information, such as garment size information, images plus other product information, and the global database 16 containing personal information regarding users, such as images, size data, personal data. The global database 16 may also contain a record for each user which holds information relating to which garments they have accessed for sizing and visualization purposes. This is known herein as the user's personal wardrobe.

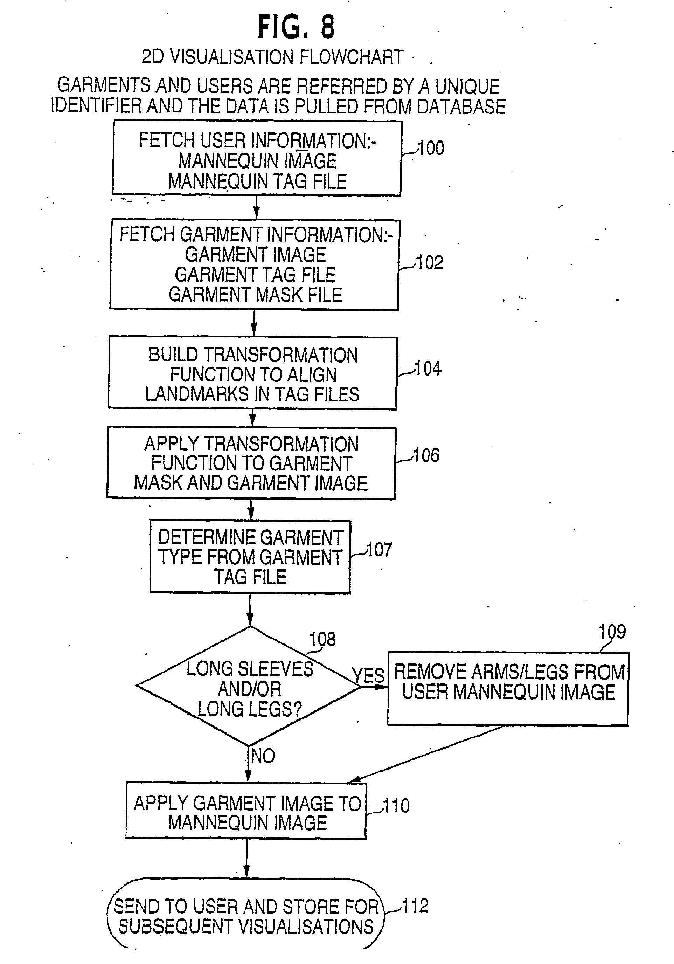

The system 10 provides visualization by a visualization engine 40 (note Figure 4). Figure 7 is a flowchart depicting a method according to the present invention for visualizing personal appearance. Figure 8 depicts in a flowchart a method for two-dimensional visualization in accordance with the method of Figure 7. A two-dimensional visualization engine (depicted schematically as 40 in Figure 4) provides a two-dimensional image fit.

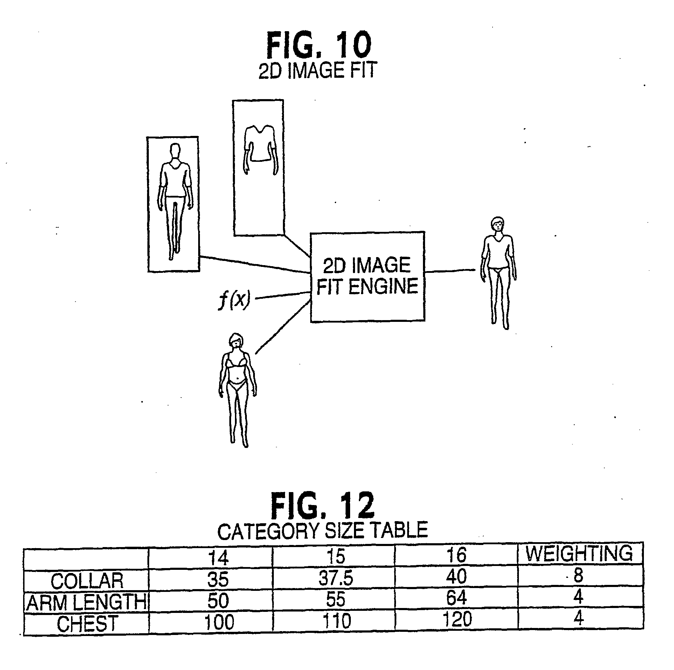

Referring to Figure 8, in steps 100 and 102, two two-dimensional images are used, one of the garment and one of the person or consumer, i.e., the person's virtual mannequin. Preferably, both images are full body images. Each image is pre-processed to give a tag file, i.e., the garment tag file and the consumer or user tag file, which contains the co-ordinates of the landmarks within the image (steps 100 and 102). The landmarks are the head, chest, waist, hips, etc. of the human form in the image. The two-dimensional image fit engine 40 takes the two tag files and produces a co-ordinates transformation function (f(x)) (step 104 in Figure 8; see also Figure 9) the objective of which is to align the co-ordinates of each landmark from the garment tag file with the co-ordinates of the corresponding landmark on the consumer tag file. The second stage applies the transformation function to the garment image (step 106 in Figure 8; see also Figure 9), stretching it to the correct shape to fit over the user image. This is repeated on a third image file, the mask file (step 106 in Figure 8; see also Figure 10). The mask is an outline of the garment which defines the elements or components of the garment image that are used to reproduce or cut out the garment image. The next stage uses the transformed mask file to cut out the image of the garment and combine it with the consumer image to form the final output image (step 110 in Figure 8).

Some garments with long legs or sleeves, which require the hands or feet from the garment image to be used in the output image, are identified (steps 107 and 108) and the arms and/or legs are also copied to the consumer image (step 109) to replace the arms and/or legs in the consumer image. If this is required, then the hands or feet from the garment image are re-colored to match the color of the user's skin. This is achieved by identifying in the consumer tag file the co-ordinates of a point on the consumer image that represents the average color of the person's skin. The output image is stored in the database 14 (step 112).

As described above, the two-dimensional image fit engine 40 transforms or configures a garment image by co-ordinates transformation so that co-ordinates of landmarks of the garment image match the co-ordinates of landmarks of the consumer image, i.e., the garment image is "stretched" to fit the model representing the consumer. In a preferred embodiment of the invention, the image fit engine does the transformation in two stages.

First, vertical morphing wherein several vertical scaling coefficients are calculated so that the top of head, neck, shoulders, waist and hips of the garment image are at the same height as in the consumer image. Next, the visualization engine 40 conducts horizontal morphing wherein several horizontal scaling coefficients are computed so that the garment image has the same shoulder, armpit, waist and hips size as the user image. The scaling using the above coefficients is applied first to the garment image and then to the mask file of the garment. As a result the garment and its outlines (the mask) are scaled or configured according to the consumer sizes. At the next stage, the garment image is copied onto the consumer image using the mask file to copy only the necessary area of the garment image.

For garments with long legs or sleeves the hands and/or feet from the garment image are used in place of the hands and/or feet in the consumer image, but they are re-colored to match the color of the user's skin. This is achieved in the following way. The consumer tag file contains the co-ordinates of a point in the consumer image that represents the average color of the user's skin. This RGB color is converted to HSV modeL Each hand/foot point that needs re-coloring is also converted to HSV color, H and S are replaced by those of the consumer color, while V is multiplied by a coefficient to keep the average brightness of the consumer image. In this way the hands/feet preserve their shading but their color is replaced by that of the user.

The landmarks are the co-ordinates in the image file of the top of head and then the left and right shoulders, waist, hips, armpits, neck, hands and feet. The garment tag file also contains a code which describes what sort of garment is in the image.

Alternatively, the present invention provides three-dimensional visualization by two methods.

A three-dimensional exact fit method having the steps of taking pattern information of a particular size garment together with information that allows physical characteristics of the material of the garment to be modeled. The system 10 assembles the garment, using solid object modeling techniques and newtonian modeling of the cloth, onto a three-dimensional model of the user to give a realistic visualization of the garment and how it fits. The assembly of a garment in the three-dimensional exact fit method works by applying an attractive force between corresponding seams of virtual cloth panels thereby pulling the panels together until the panels touch, at which point they are joined. The system 10 uses a model of a cloth (depicted as a two-dimensional network of springs) and a model of the gravitational influences on the cloth together with a three-dimensional model of the user to produce an image of the garment with the correct drape.

In this, two input files are used, one of a three-dimensional user's body and one of a garment. Preferably, the user's body file is in an Open Inventor or VRML format and describes the polygonized surface of the human body, acquired via a three-dimensional whole body scanner of the type sold by Hamamatsu Photonics, for example. The second file is a text file in a specialized format, which tells the system 10 how to join the virtual cloth panels, specifying the garment type, its pattern pieces geometry, seaming and material information and a texture image file, derived from a scan of the material of the garment giving its texture and color.

The system 10 uses an improved mass-spring model of cloth and image-space based algorithms for detecting and responding to collisions of cloth and body. The cutting patterns of the garment are positioned around the three-dimensional body using a file of co-ordinates of landmarks for alignment. This file is generated automatically by scanner software or via manual markup and consists of coordinates of body landmarks such as head, shoulders, waist, hips, crotch, etc. Then virtual attractive forces are applied along the seaming lines. After a number of iterations applying newton laws and collision detection and response algorithms the cutting patterns converge to a garment sewn around the body. Then, a few iterations with gravity are performed to drape the clothing on the body. The texture image is mapped on the pattern pieces to create a realistic look of the garment. A tool has been developed that reads DXF output from existing apparel CAD systems and produces the text file describing the geometry of the cutting patterns. The seaming and material information must be typed in since the CAD systems do not output them in a file.

Most of the cloth modeling techniques have a good degree of realism simulating the cloth but a common drawback is low speed. A relatively good result is 14 seconds per frame for the simulation of a shirt with 6,450 nodes on a SGI R10000 processor. This is a reason why these existing techniques cannot be applied to an interactive system working on the Internet. A mass-spring model has been used to describe rigid cloth behavior, which has proved to be much faster than other techniques. However, a drawback is the super-elasticity and to overcome this problem a position modification algorithm is applied to the ends of the over-elongated spring. This operation modifies the positions of many vertices and may elongate other springs. That is why this approach is applicable only if the deformation is locally distributed, which is not the case when simulating garments on a virtual body. The present invention uses a mass-spring cloth model, but introduces a new approach to overcome its super-elasticity. Instead of modifying the positions of end points of the springs that were already over-elongated, an algorithm checks their length after each iteration and does not allow elongation more than a certain threshold modifying velocities of the corresponding vertices.

Most of existing algorithms for detecting collisions between the cloth and other objects in the scene are based on geometrical object-space (OS) interference tests. Some apply prohibitive energy field around the colliding objects, but most of them use geometric calculations to detect penetration between a cloth particle and a face of the object together with optimization techniques in order to reduce the number of checks. Recently new techniques have been developed, based on image-space (IS) tests. These algorithms use graphics hardware to render the scene and then perform checks for interference between objects based on the depth map of the image. In this way a three-dimensional visualization is converted to a 2.5-dimensional visualization. As a result of using graphics hardware these approaches are very efficient. However, they have been mainly used for object interference in CAD/CAM systems, in dental practice, etc., but never for cloth-body collision detection and response. The present invention exploits an image-space approach to collision detection and response. The system 10 uses workstation graphics hardware not only to compute the z-buffer depth maps but also to interpolate the normal vectors on the human body. As a result, the algorithm is very fast and the detection and response time do not depend on the number of faces on the human body.

A second preferred method is a three-dimensional image fit method having the steps of generating a three-dimensional version of the two-dimensional image fit process described above in connection with Figure 8. The three-dimensional image fit method functions using landmark points in the same way as the two-dimensional image fit process except that three-dimensional images and tag files are used. The three-dimensional images of the user and the garment are obtained from three-dimensional body scanners.

Both three-dimensional methods allow the drape of the cloth to be visualized. The three-dimensional image fit and exact fit methods may be enhanced to allow animation of the three-dimensional model. Thus, a user is provided with a visualization of a moving image of a model wearing the clothes.

The system 10 may use either standard models or an image of the user for a virtual mannequin. In the case of two-dimensional image fit visualization, a user's image may be used as long as the models are in a correct pose, i.e., the same pose as that of the mannequin that is used in the garment images. The system 10 may take a skin color preference from a user and use the preference to re-color the hands and feet from the garment image.

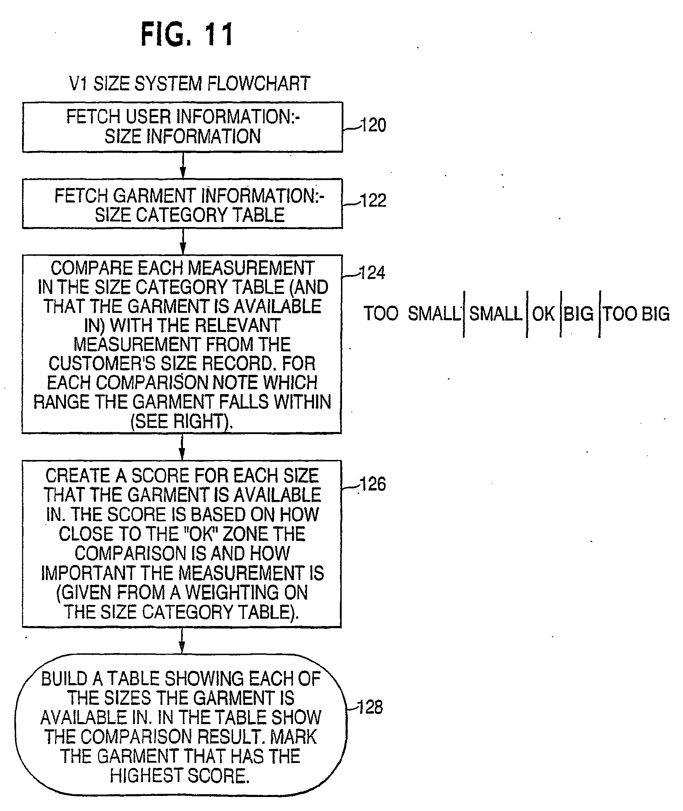

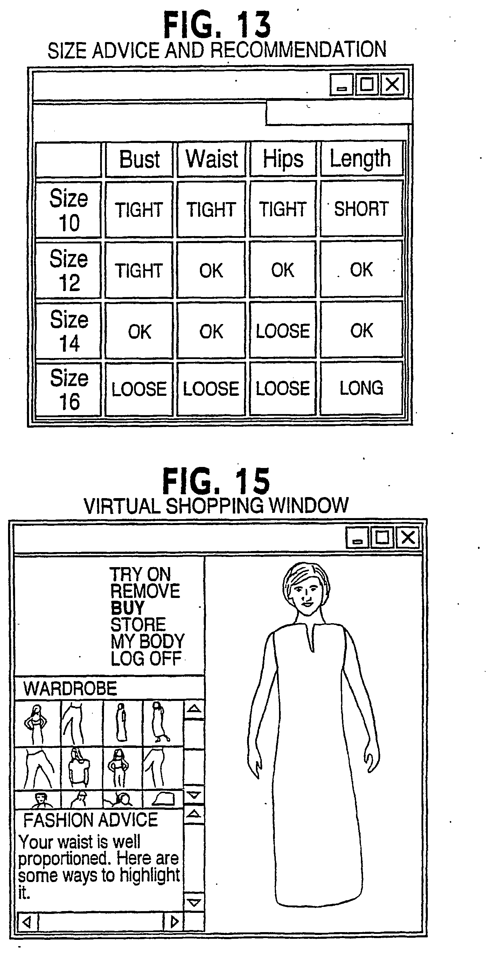

In another aspect of the present invention, a sizing engine 42 (note Figure 4) provides users of the system 10 with fit information and sizing recommendations for garments. Figure 11 depicts in a flowchart the steps of a method for providing users with fit information and sizing recommendations for a garment The sizing engine 42 utilizes a "best fitting body" size for a garment, i.e., a human body which has the correct measurements of the dimensions, e.g., chest, bust, waist, etc., to provide the best fit for an item of clothing, as deemed by the designer/manufacturer of the item of clothing. Referring to Figure 12, the best fitting body sizes for all size variations for a set of garments, such as men's formal shirts, for example, are entered into the garment databases 18 in a size category table. The table contains the best fitting body size for each of the size designators or variations that the type of garment is available in, e.g., size 14, 15, 16, 17. Each size category table includes dimensions for that type of garment, e.g., collar girth, arm length, chest girth, together with the actual measurements for these dimensions, i.e., the best fitting body size, for all the available size variations. All size measurements relating to apparel for each person are also stored in the database 14.

Referring to Figure 11, when a user wishes to obtain size advice the system 10 fetches user and garment information (steps 120 and 122) and compares each of the dimensions from the user's measurement record with those of the best fitting body for each size variation of the garment under consideration (step 124). A score is assigned to each relevant dimension, i.e., bust, waist, hips, etc., for each size variation of the garment based upon how close the user's measurements are to those of the best fitting body (step 126). A weighting, which is assigned to each relevant dimension based upon its importance in a best fitting of the particular garment under consideration (note Figure 12), is applied to the score to obtain a total score for each size variation of the garment under consideration (step 126). A table is generated (step 128) which shows the results of the comparison and the scoring (note Figure 13). In this, the user is told how well each size will fit across the relevant dimensions, i.e., bust, waist, hips, etc.

As described above, the size category table for each garment set (note Figure 12) also holds information for each of the relevant dimensions of the garment to give an indication, i.e., weighting, of how important each of the dimensions, such as collar, is for a garment, such as a men's formal shirt. This weighting is used together with the fit information derived above to give an overall size recommendation for the garment, i.e., which size is best for the user. The results may be shown to the user as a single size recommendation or as a table (Figure 13) showing the fit information for each of the available sizes with the recommended size highlighted, for example, in a different color.

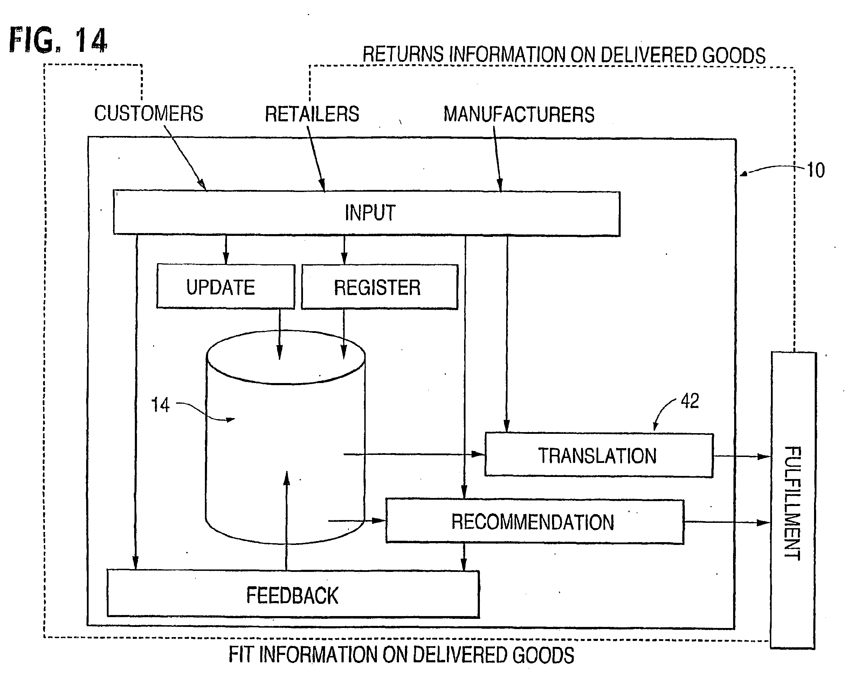

In another preferred embodiment, the sizing engine 42 may also use extra user preferences for fit such as, for example, loose or tight fitting, which are input into the system 10 by a user, for example (see Figure 14). The user's fit preference is applied to the size category table to produce an intermediate user specific size category table for that garment. The sizing engine 42 also provides feedback paths to allow the user and garment sizes stored in the database 14 to be modified based on information collected from the retailer/manufacturer regarding returns and from the user regarding how well garments fitted (note again Figure 14). This feedback feature allows the system 10 to learn the user's correct size information from actual purchases. It also allows incorrect product information to self-correct through feedback which is collected relating to a garment or a user so that a history for both is built up. An intelligent system 10 assesses the history for a user or garment as each piece of feedback arrives. When certain thresholds are met the system 10 modifies the size data for the garment or the user. This modified size information is then used for subsequent size recommendations.

A method is provided for a user to register an account on the database 14 (note also Figure 14). The system 10 allows the user to register personal details, choose a two-dimensional image they wish to use for visualization, or, alternatively, enter a two-dimensional image of themselves via operator entry, and provide size information. Size information is obtained by a user measuring themselves and entering the information into the database 14. Alternatively, size information may be obtained by a reverse look up of a good fitting garment that is already in the garment databases 18 or via a three-dimensional scanner and software which extracts size information from the scan. Preferably, the three-dimensional scan may be uploaded to the database to allow three-dimensional visualization.

A method is provided for registering garments in the database 14 by retailers (note also Figure 14). In this, garment information such as price, color, title, size range, relevant size category table, the garment image, mask image, tag file, catalogue image, the URL the garment can be purchased from (usually the retailer's web site) is provided. Preferably, garment information may be registered via a set of web forms accessing the garment databases 18 or via bulk export from the retailer's system. More preferably, retailers may register three-dimensional models of the garments derived from computer assisted design data or three-dimensional scans, and these data are used for three-dimensional visualization. An XML standard, for example, may be used for describing body and garment information for the purposes of visualization and sizing.

A method is provided for visual and product information about a garment to be collected, processed and entered into the system 10. The method includes selection of a garment product set, digital photography of the garments worn by a mannequin, processing the images in a standard graphics application to produce the mask file, processing the images in a standard graphics application to produce the tag file, producing size category tables that describe the size information for garments, mapping each garment onto the relevant size category table, and loading the information to the database 14.

Virtual shopping may be provided by a combination of the above components. A set of dynamic web pages and applications running on a web application server are provided to be accessed over the Internet via a number of access interfaces.

Referring to Figure 15, in a web based interface, a user is given a separate window, the Virtual Shopping Window (VSW), which holds the mannequin used for visualization, and allows product images to be visualized on the mannequin. The VSW gives size recommendations on the products displayed by the mannequin. The user may see the contents of their personal wardrobe and manage it. New users can register on the web by filling in forms on the screen. The web-based service may be activated by clicking on buttons, which are placed on the retailer's web site, for example (note Figure 16).

Other interfaces include a call center in which access to the sizing engine is obtained from a home shopping company's call center, for example. This interface allows operators at the call center to give size advice to consumers as they place their orders, over the telephone. The operators at the call center are given a set of forms that allow them to register customer details and make size recommendations. Alternatively, the retailer can integrate directly with the virtual shopping service to make the size information appear on their existing operator forms. This version of the service does not involve visualization.

An interactive television interface allows visualization and sizing advice to be accessed when browsing a retailer's interactive TV application. Some current interactive service may only support access to sizing advice at the point of purchase. Interactive voice interface allows access to the sizing engine from any PSTN or cellular telephone. An in-store access interface allows in store access to sizing and visualization features. Retrieval of sizing advice may be accomplished through presentation of a card containing a barcode. The card is scanned to identify the user and then the user can present the barcodes of the products for which they wish to obtain size advice. The advice is then shown on the screen of the terminal.

Visualization and sizing advice may also be accessed from a third-generation mobile device interface and/or access to a sizing engine may be obtained from a wireless application protocol phone interface.

According to a preferred embodiment of the present invention, the personal wardrobe, a virtual mirror, custom clothes, a retail catalogue builder and a card are provided as discussed below.

The system 10 provides users and/or subscribers with a virtual personal wardrobe. The personal wardrobe includes a user registration/service functionality of the system 10. Users may access their personal wardrobes either directly, via a link on the web site of a retailer participating in the system 10 or via links on the web sites of other third-party participants. A user's personal wardrobe may contain the user's personal mannequin, personal body data, personal information, fashion brand preferences and subscriptions to sales promotions. Each personal wardrobe may comprise three parts. First, the user's mannequin. Second, clothing of the particular retailer or retailers that the user is visiting. Third, a closet area containing whatever items the individual wishes to store. Users may try on clothing and accessories from participating retailers on their personal mannequins, store the clothing in their closet areas, change their hair and makeup, receive personal fashion advice, and receive targeted information on sales promotions. Personal wardrobes may be accessed by means of suitable cards, and may be uniformly and globally accessible via any web-enabled device, such as personal computers, electronic kiosks and televisions, either in-store or at home, and via wireless application protocol enabled devices.

Users may register either in-store or at home. In order to register, users may enter information regarding their size, shape and visual appearance. The system 10 provides high functionality and accommodates the submission of such information via a host of different means. For example, users may download head images (two-dimcnsional or three-dimensional digital head and face images) and body images (two-dimensional or three-dimensional whole body images) directly from digital body capture devices, such as body scanner kiosks. Users who do not have access to body capture devices may specify their best fitting items of clothing by sizes and brands. This information in combination with product models maintained in the system 10 provides deduction of accurate information concerning the user. Users may also input key body measurements, initially obtained via hand measurement, and fashion brand preferences, such as, selections from a list of brands. Once this information is entered, the user is given an identification number, such as a membership number, and then asked to set a personal identification number for added security. Membership information may also be encapsulated in e-wallets and other personal profile holding systems. The system 10 provides means for users to augment personal data so as to facilitate increasingly personalized visualization service.

The system 10 may interface with existing mannequin technology by means of an application programming interface (API). Moreover, in order to provide for participation by those retailers who do not currently employ mannequin technology, the system 10 may include mannequin functionality. The system 10 provides for the application programming interface information, in particular, the name, card and personal identification number, to have a high level encryption to maintain the security of the information. Users' access to the system 10, for example, by individuals, partner retailers or portals, is provided through a common application programming interface (API). The interface handles requests from a variety of differing media channels, such as, the Internet, interactive television, kiosks, etc. Regardless of the channel being used to access the system the application programming interface provides a standard set of functions to be called, e.g., logon and logoff, display user wardrobe, transfer clothes to mannequin, make a size recommendation, etc. For example, a suitable application programming interface call may be embedded in a web page to allow, for example, an Internet user to log on to the system 10. In this, the application programming interface returns the HTML necessary to open a new browser containing the user's personal wardrobe.

The system 10 provides a virtual mirror functionality which provides users with the ability to see themselves on a personal computer or on interactive television in the form of a virtual model wearing a virtual garment. The virtual mirror functionality includes accurate body data, for example, obtained from a body scanner, a generic body representation, i.e., personal mannequins, representation of a product, such as clothes, and suitable graphics for accurately modeling the cloth dynamics, such as drape and wrinkles. In one embodiment, the cloth modeling is provided with the user walking or moving around in the new clothes.

The system 10 provides an accurate scanning functionality for obtaining body information, a system for storing and retrieving that scanned information and methods for virtually trying on clothing. In this, the system 10 addresses the needs of the clothing industry in providing personalized clothes to meet current consumer demand for personalized clothing. Usually a very large number of measurements, for example, 75, and shape information, called attitudes, are required to provide personalized clothes. This information may be derived from the 100,000 or so data points obtained by body scanners.

Another key issue facing retail partners in online shopping, which also is addressed by the system 10, is in the entry of their clothing products in a format that can be manipulated or stretched so that the clothes can be visualized on a virtual mannequin. Due to the large product ranges of most retailers and the associated costs in representing them in a CAD/CAM-type format it is difficult for retailers to compile such data. The system 10 provides a content management facility for efficient, quick loading of garment details to the system 10 by retailers and brand owners. Using the system 10 different representations of the clothing may be built and the clothing placed on virtual mannequins at different scales.

In addition to being accessible over the Internet, the system 10 may be accessed through cards. In this, users may gain access to their personal wardrobes on interactive television or in in-store kiosks by swiping a card through a card-reading machine. The cards may be issued by retailers participating in the system 10. Such cards include, for example, existing loyalty cards.

In addition to the foregoing, the system 10 provides retailers with means to create printed product catalogues that contain realistic images of a user wearing different types of new clothing and accessories. The images may be either set against plain backgrounds or superimposed on background images such as beaches and other settings. The personal catalogue may use the personal body data of a user in combination with the visualization technologies described above.

### Summary of Major Advantages of the Invention

After reading and understanding the foregoing description of preferred embodiments of the invention, in conjunction with the illustrative drawings, it will be appreciated that several distinct advantages of the subject system and method for visualizing personal appearance are obtained.

In accordance with the foregoing, the present invention provides a system and method of electronic visualization involving multiple data and information provider sources. In this, the system and method of the invention utilize electronic personal data relating to an individual person and electronic retail catalogues of enhanced images which are capable of being mapped onto a person's personal image. The resulting combined image is used by the user for accepting or rejecting a selected item from the electronic catalogue. Preferably, the images are retained and stored for future use in an electronic personal wardrobe.

Advantageously, the system and method of the invention provide access to multiple retailer/provider databases, which can be readily accessed by a user, so that items from different retailers/providers can be combined for assessment purposes such as, for example, fashion outlets, such as clothes shops, where an individual may wish to try a number of different items of clothing from one retail outlet with items of clothing from another retail outlet. Further, all of the items of clothing can be applied to a virtual image of the user, which is formed from personal information on the user stored within the system.

Personal information takes the form of a universal record which may combine the individual shape, sizing and visual appearance data. This data may be stored on a central "global" database of user information, from where it can be accessed when needed. For example, the information may be accessed by a user whilst surfing the Internet, whilst in a retail outlet or via some other electronic kiosk. The information may be made available to the user following entry of a personal code, which may comprise a name, account number and personal identification number (PIN). This access may also be achieved using a card having a magnetic strip, for example, which can be "swiped" when needed followed by the entry of a personal identification number. Once access has been obtained to the universal record of personal information, the visualization and size recommendation process can commence.

Although the personal information stored in the universal record may take many forms, preferably it includes a two-dimensional or three-dimensional photo-realistic or aspirational representation of the user's body. An accurate two-dimensional or three-dimensional representation of the user's face may also be stored. In either event, this body information may be captured using a body scanner of the kind described above. More particularly, a user may visit a body scanner where a personal record can be taken and either stored directly on a central database or, alternatively, stored on some form of storage medium (such as a CD-ROM), which could be taken away by the customer. The customer may also update their records either by being re-scanned, say every 6 months or so because of the changes in body shape over time, or the customer may manually update their records by accessing their records on a central database via the Internet or other electronic medium.

The universal record relating to a customer may also include personal preferences for certain types of product. As a result, if a customer accesses a search area during shopping and makes a request for a certain type of product, the personal information stored in the universal record may help to highlight products and programs which are likely to be of particular interest to the customer. As a result, more focused shopping can result.

According to another aspect of the present invention, a virtual personal wardrobe is provided in which products either already purchased or under consideration may be stored for future comparison and/or combination with other products in the future. In this, the products may be stored as they would be in a normal human environment, such as in drawers, on rails or in cupboards. A user may then select, for example, by "pointing and clicking," particular products or body images within the personal wardrobe and place them over an image of the user, for example, by "dragging," so that the selected images are applied to the user's image for assessment purposes. Alternatively, the products may be displayed as thumbnail images in a grid as shown in Figure 15.

Some of the above-discussed features may have an interface, such as an application programming interface (API), which enables information stored at different retail sites in different formats to be accessed and applied to a two-dimensional or three-dimensional representation of a user. Advantageously, a universal record comprising personal information may take the form of a personal mannequin, which resembles closely the customer defined by the universal record. Such a personal record may be produced using two-dimensional or three-dimensional photographic devices or scanners or other appropriate means. Further, access to a universal record may be achieved using a magnetic card, a smart card or some other appropriate device. Personal identification numbers and other means of identification may be used, as appropriate, to protect the personal information.

In another aspect, the present invention provides means for assisting a retailer to enter a product into a catalogue in the system for subsequent accessing by a customer. Photographs of the product may be readily received and converted into a form that can be applied to a personal mannequin, for example.

As a result of the personal information being stored as a universal record in a global database, which database may ultimately store millions of separate universal records and can be accessed from anywhere in the world, market research information may be obtained by searching this database on a general level. In this way, the confidential nature of the personal information would not be prejudiced, but general information regarding customer preferences, number of times a particular retail site is accessed, etc., may be obtained.

According to a specific embodiment of the present invention, a system and method provides electronic fashion shopping visualization involving multiple catalogues and multiple retailer sites, replicating the traditional shopping experience. A customer enters personal information (i.e., name, number, personal identification number) to gain access to their personal shopping information and fashions. A retailer constructs a special electronic catalogue of fashions with two-dimensional or three-dimensional images which are enhanced so that they can be mapped onto a customer's two-dimensional or three-dimensional image to allow them to visualize themselves in the fashions. Personal information on a customer is accumulated manually and gathered automatically from electronic devices including two-dimensional or three-dimensional photographic devices, two-dimensional or three-dimensional scanners for body shape, and from monitoring electronic shopping activity. The customer selects fashions from multiple catalogues and multiple retail sites and the multiple fashions are combined on the customer's two-dimensional or three-dimensional image for visualization. Sizing and fit recommendations are available so as to deliver, in a virtual manner, the personalized skills and knowledge of a designer of a garment to a consumer. The customer retains selected fashions in their personal electronic wardrobe or personal electronic catalogue, maintained by the system.

If a customer has a personal electronic wardrobe of items which the customer is considering purchasing in the future, this wardrobe may be designed to trigger action by the retailer of the item in the wardrobe. Thus, if a retailer knows that someone is considering purchasing a particular item, the retailer may announce directly to the customer special offers and promotions which could assist the retailer in obtaining a sale. These promotions would be delivered via electronic media, such as email, to the personal computer of the customer, interactive television or perhaps by a third-generation (3G) mobile device or a wireless application protocol (WAP) enabled cellular phone.

In describing the invention, reference has been made to preferred embodiments and illustrative advantages of the invention. Those skilled in the art, however, and familiar with the instant disclosure of the subject invention, may recognize:additions, deletions, modifications, substitutions and other changes that fall within the purview of the subject invention, limited only by the appended claims.

## Claims

1. A method for visualising personal appearance and providing fit and sizing recommendations for garments, the method comprising the steps of:-
storing personal information of a user, said stored personal information including a model representing selective body features;
storing data for an item of interest to the user, said stored data including a product set of said item comprising variations of the item offered to the user for selection, said stored item data including image data of the item;
identifying a plurality of landmarks of said model representing body features and a plurality of landmarks of said item image;
transforming each landmark of said item image to a corresponding landmark of said model representing body features to align said landmarks of said item image with said landmarks of said model;
modifying said item image to fit said model representing body features on the basis of said aligned landmarks;
forming an output image by copying said transformed item image onto said model, said output image comprising visualisation of an appearance of the model representing body features using the item; and
selecting one or more of the variations from said product set for recommendation to the user based upon said stored personal information of the user, said stored item data, and predetermined criteria for selecting the item; **characterised in that**:
the step of storing personal information of the user includes storing size measurements of the user;
said variations of the item comprise size variations of a garment;
the step of storing item data includes storing size information for each of the size variations of the garment, the size information comprising size measurements for relevant dimensions of a best fitting body for each of said size variations of the garment;
the step of selecting one or more of the items includes selecting one or more of the size variations of the garment by comparing said size measurements of the user with said size measurements for relevant dimensions of the best fitting body for each of said size variations of the garment; and
the method further comprising the step of presenting the selected one or more size variations to the user as fit recommendations.

2. A method as claimed in claim 1, wherein the step of storing personal information includes storing information for one or more of body images, body shape and size, personal characteristics of the user and personal preferences of the user.

3. A method as claimed in claim 1 or claim 2, wherein the step of identifying landmarks comprises identifying co-ordinates of landmarks of said model and said item image.

4. A method as claimed in claim 3, wherein the step of transforming each landmark comprises producing a co-ordinates transformation function, the aim of which is to align the co-ordinates of each landmark of the item image with the co-ordinates of the corresponding landmark of said model representing body features.

5. A method as claimed in claim 4, wherein:-
the step of storing item data includes storing data for a mask image of the item;
the step of transforming said item image includes transforming said mask image of the item by said co-ordinates transformation function; and
the step of forming an output image includes copying said transformed item image onto said model using said transformed mask image of the item.

6. A method as claimed in any one of claims 1 to 5, wherein
the step of storing item data includes storing weighting for each of said relevant dimensions of the best fitting body for each of said size variations of the garment;
the step of selecting one or more of the items further includes:
assigning a higher number to each relevant dimension for each size variation depending upon how close the corresponding size measurement of said each relevant dimension is to a corresponding size measurement of the user as determined by said comparing step;
determining a product of the number assigned to said each relevant dimension for each size variation and the weighting assigned to said each relevant dimension; and
determining a sum of all said products for all relevant dimensions for each size variation; and
the step of presenting the selected one or more size variations to the user as fit recommendations further includes recommending at least one size variation of the garment to the user based upon a highest sum for the at least one size variation as determined by said sum of all said products.

7. A method as claimed in any one of claims 1 to 6, wherein
the step of storing personal information of the user further comprises storing personal preferences and history of the user; and
the step of selecting one or more of the items further comprises selecting said one or more of the items based upon the personal information and history of the user.

8. A method as claimed in claim 7, wherein
the stored personal preferences and history of the user include one or more of fit preferences of the user and buying history of the user;
the step of storing personal information of the user further comprises: modifying said user information based upon said buying history of the user; and
the step of storing item data includes:
storing information with respect to garment returns and fitting; and
correcting said stored item data based upon said garment returns and fitting information.

9. A system (10) for visualising personal appearance and providing fit and sizing recommendations for garments, the system comprising:-
first means (16) for storing personal information of a user of the system, said personal information including a model representing selective body features;
second means (18) for storing data for an item of interest to the user, said item having a product set comprising variations of the item offered to the user for selection, said item data including image data of the item;
means (40) for identifying landmarks on said model representing body features and for identifying landmarks on said item image;
means (42) for transforming each landmark of said item image to a corresponding landmark of said model representing selective body features to align said landmarks of the item image with landmarks of said model;
means (42) for modifying said item image to fit said model representing body features on the basis of said aligned landmarks;
means (12) for forming an output image by copying said transformed item image onto said model; said output image comprising visualisation of an appearance of the model representing body features using the item; and
means (128) for selecting one or more of the variations from said product set for recommendation to the user based upon said personal information of the user, said item data, and predetermined criteria for selecting the item; **characterised in that**:
said first means is such as to store size measurements of the user;
said variations of the item comprise size variations of a garment;
said second means is such as to store size information for each of the size variations of the garment, the size information comprising size measurements for relevant dimensions of a best fitting body for each of said size variations of the garment;
said selecting means is such as to select one or more of the size variations of the garment by comparing said size measurements of the user with said size measurements for relevant dimensions of the best fitting body for each of said size variations of the garment; and
the system further comprises means for presenting the selected one or more size variations to the user as fit recommendations.

10. A system (10) as claimed in claim 9, wherein said personal information includes body images, body shape and size, personal characteristics of the user and personal preferences of the user.

11. A system (10) as claimed in claim 9 or claim 10, wherein the item is a garment.

12. A system (10) as claimed in claim 11, wherein
the item is a garment and said product set comprises size variations of the garment;
said item data includes size information comprising size measurements of a best fitting body for each of said size variations of the garment; and
said selecting means (128) is such as to select by applying a weighting to a comparison of size information of said user with corresponding size measurements of said best fitting body.

13. A system (10) as claimed in any one of claims 9 to 12, further comprising:
a mask image of the item;
means for transforming said mask image of the item to fit said model representing body features; and
said output image forming means (12) is such as to copy said transformed item image onto said model using said transformed mask image of the item.

14. A system (10) as claimed in any one of claims 9 to 13, further comprising means for accessing the system by one or more of a personal computer, in-store terminal, interactive television, call centre, third-generation mobile device and wireless application protocol enabled device.

## Patentansprüche

1. Verfahren zur Visualisierung des persönlichen äußeren Erscheinungsbildes und zum Bereitstellen von Sitz- und Größenempfehlungen für Kleidungsstücke, wobei das Verfahren die folgenden Schritte aufweist:
Speichern persönlicher Informationen eines Benutzers, wobei die gespeicherten persönlichen Informationen ein Modell enthalten, das ausgewählte Körpermerkmale repräsentiert,
Speichern von Daten für einen Gegenstand, der für den Benutzer von Interesse ist, wobei die gespeicherten Daten einen Produktsatz des Gegenstandes enthalten, der dem Benutzer zur Auswahl angebotene Variationen des Gegenstandes umfasst, wobei die gespeicherten Gegenstandsdaten Bilddaten des Gegenstandes enthalten,
Identifizieren einer Vielzahl charakteristischer Punkte des Körpermerkmale repräsentierenden Modells und einer Vielzahl charakteristischer Punkte des Gegenstandsbildes,
Transformieren jedes charakteristischen Punktes des Gegenstandsbildes in einen entsprechenden charakteristischen Punkt des Körpermerkmale repräsentierenden Modells, um die charakteristischen Punkte des Gegenstandsbildes mit den charakteristischen Punkten des Modells auszurichten,
Modifizieren des Gegenstandsbildes zur Anpassung an das Körpermerkmale repräsentierende Modell auf der Basis der ausgerichteten charakteristischen Punkte,
Bilden eines Ausgabebildes durch Kopieren des transformierten Gegenstandsbildes auf das Modell, wobei das Ausgabebild eine Visualisierung eines äußeren Erscheinungsbildes des Körpermerkmale repräsentierenden Modells unter Verwendung des Gegenstandes enthält, und
Auswählen einer oder mehrerer der Variationen aus dem Produktsatz zur Empfehlung an den Benutzer auf Basis der gespeicherten persönlichen Informationen des Benutzers, der gespeicherten Gegenstandsdaten und vorbestimmter Kriterien zur Auswahl des Gegenstandes, **dadurch gekennzeichnet, dass**,
der Schritt des Speicherns persönlicher Informationen des Benutzers das Speichern von Größenabmessungen des Benutzers enthält,
die Variationen des Gegenstandes Größenvariationen eines Kleidungsstückes umfassen,
der Schritt des Speicherns von Gegenstandsdaten das Speichern von Größeninformationen für jede der Größenvariationen des Kleidungsstückes enthält, wobei die Größeninformationen Größenabmessungen für relevante Dimensionen eines am besten passenden Körpers für jede der Größenvariationen des Kleidungsstückes umfassen,
der Schritt des Auswählens von einem oder mehreren der Gegenstände das Auswählen einer oder mehrerer der Größenvariationen des Kleidungsstückes durch Vergleichen der Größenabmessungen des Benutzers mit den Größenabmessungen für relevante Dimensionen des am besten passenden Körpers für jede der Größenvariationen des Kleidungsstückes enthält, und
das Verfahren ferner den Schritt aufweist, die ausgewählte eine Größenvariation oder die ausgewählten mehreren Größenvariationen dem Benutzer als Sitzempfehlungen zu liefern.

2. Verfahren nach Anspruch 1, bei dem der Schritt des Speicherns persönlicher Informationen das Speichern von Informationen für eins oder mehrere von Körperbildern, Körperform und -größe, persönlichen Charakteristika des Benutzers und persönlichen Präferenzen des Benutzers enthält.

3. Verfahren nach Anspruch 1 oder Anspruch 2, bei dem der Schritt des Identifizierens charakteristischer Punkte das Identifizieren von Koordinaten charakteristischer Punkte des Modells und des Gegenstandsbildes umfasst.

4. Verfahren nach Anspruch 3, bei dem der Schritt des Transformierens jedes charakteristischen Punktes das Erzeugen einer Koordinatentransformationsfunktion umfasst, deren Ziel darin besteht, die Koordinaten jedes charakteristischen Punktes des Gegenstandsbildes mit den Koordinaten des entsprechenden charakteristischen Punktes des Körpermerkmale repräsentierenden Modells auszurichten.

5. Verfahren nach Anspruch 4, bei dem:
der Schritt des Speicherns von Gegenstandsdaten das Speichern von Daten für ein Maskenbild des Gegenstandes enthält,
der Schritt des Transformierens des Gegenstandsbildes das Transformieren des Maskenbildes des Gegenstandes durch die Koordinatentransformationsfunktion enthält, und
der Schritt des Bildens eines Ausgabebildes das Kopieren des transformierten Gegenstandsbildes auf das Modell unter Verwendung des transformierten Maskenbildes des Gegenstandes enthält.

6. Verfahren nach einem der Ansprüche 1 bis 5, bei dem
der Schritt des Speicherns von Gegenstandsdaten das Speichern einer Gewichtung für jede der relevanten Dimensionen des am besten passenden Körpers für jede der Größenvariationen des Kleidungsstückes enthält,
der Schritt des Auswählens eines oder mehrerer der Gegenstände ferner enthält:
Zuweisen einer höheren Zahl zu jeder relevanten Dimension für jede Größenvariation in Abhängigkeit davon, wie nahe die entsprechende Größenabmessung von der jeweiligen relevanten Dimension einer entsprechenden Größenabmessung des Benutzers ist, wie es durch den Vergleichsschritt bestimmt wurde,
Bestimmen eines Produktes der Zahl, die der jeweiligen relevanten Dimension für jede Größenvariation zugewiesen ist, und der Gewichtung, die der jeweiligen relevanten Dimension zugewiesen ist, und
Bestimmen einer Summe aller dieser Produkte für alle relevanten Dimensionen für jede Größenvariation, und
der Schritt des Lieferns der gewählten einen Größenvariation oder der gewählten mehreren Größenvariationen an den Benutzer als Sitzempfehlungen ferner das Empfehlen mindestens einer Größenvariation des Kleidungsstückes an den Benutzer auf Basis einer höchsten Summe für die mindestens eine Größenvariation enthält, wie sie durch die Summe aller Produkte bestimmt ist.

7. Verfahren nach einem der Ansprüche 1 bis 6, bei dem
der Schritt des Speicherns persönlicher Informationen des Benutzers ferner das Speichern persönlicher Präferenzen und einer Historie des Benutzers umfasst, und
der Schritt des Auswählens von einem oder mehreren der Gegenstände ferner das Auswählen des einen oder der mehreren der Gegenstände auf Basis der persönlichen Informationen und der Historie des Benutzers umfasst.

8. Verfahren nach Anspruch 7, bei dem
die gespeicherten persönlichen Präferenzen und die gespeicherte Historie des Benutzers eins oder mehrere von Sitzpräferenzen des Benutzers und Kaufhistorie des Benutzers enthalten,
der Schritt des Speicherns persönlicher Informationen des Benutzers ferner umfasst: Modifizieren der Benutzerinformationen auf Basis der Kaufhistorie des Benutzers, und
der Schritt des Speicherns von Gegenstandsdaten enthält:
Speichern von Informationen in Bezug auf Kleidungsstückrückgaben und -anproben und
Korrigieren der gespeicherten Gegenstandsdaten auf Basis der Kleidungstückrückgaben- und -anprobeninformationen.

9. System (10) zur Visualisierung des persönlichen äußeren Erscheinungsbildes und zum Bereitstellen von Sitz- und Größenempfehlungen für Kleidungsstücke, wobei das System aufweist:
ein erstes Mittel (16) zum Speichern persönlicher Informationen eines Benutzers des Systems, wobei die persönlichen Informationen ein Modell enthalten, das ausgewählte Körpermerkmale repräsentiert,
ein zweites Mittel (18) zum Speichern von Daten für einen Gegenstand, der für den Benutzer von Interesse ist, wobei der Gegenstand einen Produktsatz hat, der dem Benutzer zur Auswahl angebotene Variationen des Gegenstandes umfasst, wobei die Gegenstandsdaten Bilddaten des Gegenstandes enthalten,
ein Mittel (40) zum Identifizieren charakteristischer Punkte an dem Körpermerkmale repräsentierenden Modell und
zum Identifizieren charakteristischer Punkte an dem Gegenstandsbild,
ein Mittel (42) zum Transformieren jedes charakteristischen Punktes des Gegenstandsbildes in einen entsprechenden charakteristischen Punkt des ausgewählte Körpermerkmale repräsentierenden Modells, um die charakteristischen Punkte des Gegenstandsbildes mit charakteristischen Punkten des Modells auszurichten,
ein Mittel (42) zum Modifizieren des Gegenstandsbildes zur Anpassung an das Körpermerkmale repräsentierende Modell auf der Basis der ausgerichteten charakteristischen Punkte,
ein Mittel (12) zum Bilden eines Ausgabebildes durch Kopieren des transformierten Gegenstandsbildes auf das Modell, wobei das Ausgabebild eine Visualisierung eines äußeren Erscheinungsbildes des Körpermerkmale repräsentierenden Modells unter Verwendung des Gegenstandes enthält, und
ein Mittel (128) zum Auswählen einer oder mehrerer der Variationen aus dem Produktsatz zur Empfehlung an den Benutzer auf Basis der persönlichen Informationen des Benutzers, der Gegenstandsdaten und vorbestimmter Kriterien zur Auswahl des Gegenstandes, **dadurch gekennzeichnet, dass**:
das erste Mittel ausgebildet ist, um Größenabmessungen des Benutzers zu speichern,
die Variationen des Gegenstandes Größenvariationen eines Kleidungsstückes umfassen,
das zweite Mittel ausgebildet ist, um Größeninformationen für jede der Größenvariationen des Kleidungsstückes zu speichern, wobei die Größeninformationen Größenabmessungen für relevante Dimensionen eines am besten passenden Körpers für jede der Größenvariationen des Kleidungsstückes umfassen,
das Auswahlmittel ausgebildet ist, um eine oder mehrere der Größenvariationen des Kleidungsstückes durch Vergleichen der Größenabmessungen des Benutzers mit den Größenabmessungen für relevante Dimensionen des am besten passenden Körpers für jede der Größenvariationen des Kleidungsstückes auszuwählen, und
das System ferner ein Mittel zum Liefern der ausgewählten einen Größenvariation oder der ausgewählten mehreren Größenvariationen an den Benutzer als Sitzempfehlungen aufweist.

10. System (10) nach Anspruch 9, bei dem die persönlichen Informationen Körperbilder, Körperform und -größe, persönliche Charakteristika des Benutzers und persönliche Präferenzen des Benutzers enthalten.

11. System (10) nach Anspruch 9 oder Anspruch 10, bei dem der Gegenstand ein Kleidungsstück ist.

12. System (10) nach Anspruch 11, bei dem
der Gegenstand ein Kleidungsstück ist und der Produktsatz Größenvariationen des Kleidungsstückes umfasst,
die Gegenstandsdaten Größeninformationen enthalten, die Größenabmessungen eines am besten passenden Körpers für jede der Größenvariationen des Kleidungsstückes umfassen, und
das Auswahlmittel (128) ausgebildet ist, um durch Anwenden einer Gewichtung auf einen Vergleich von Größeninformationen des Benutzers mit entsprechenden Größenabmessungen des am besten passenden Körpers auszuwählen.

13. System (10) nach einem der Ansprüche 9 bis 12, das ferner umfasst:
ein Maskenbild des Gegenstandes,
ein Mittel zum Transformieren des Maskenbildes des Gegenstandes zur Anpassung an das Körpermerkmale repräsentierende Modell, und
wobei das ein Ausgabebild bildende Mittel (12) ausgebildet ist, um das transformierte Gegenstandsbild unter Verwendung des transformierten Maskenbildes des Gegenstandes auf das Modell zu kopieren.

14. System (10) nach einem der Ansprüche 9 bis 13, das ferner ein Mittel zum Zugreifen auf das System durch einen Personal-Computer, eine in einem Geschäft befindliche Benutzerstation, interaktives Fernsehen, ein Anrufzentrum, ein mobiles Gerät der dritten Generation und/oder ein für das drahtlose Anwendungsprotokoll (wireless application protocol) eingerichtetes Gerät aufweist.

## Revendications

1. Procédé pour visualiser une apparence personnelle et délivrer des conseils d'ajustage et de taille pour des vêtements, le procédé comportant les étapes consistant à :
mémoriser des informations personnelles d'un utilisateur, lesdites informations personnelles mémorisées incluant un modèle représentant des caractéristiques corporelles sélectives,
mémoriser des données pour un article d'intérêt pour l'utilisateur, lesdites données mémorisées incluant un ensemble de produits dudit article comportant des variations de l'article proposé à l'utilisateur en vue d'une sélection, lesdites données d'article mémorisées incluant des données d'image de l'article,
identifier une pluralité de points de repère dudit modèle représentant des caractéristiques corporelles et une pluralité de points de repère de ladite image d'article,
transformer chaque point de repère de ladite image d'article en un point de repère correspondant dudit modèle représentant des caractéristiques corporelles pour aligner lesdits points de repère de ladite image d'article sur lesdits points de repère dudit modèle,
modifier ladite image d'article pour l'ajuster audit modèle représentant des caractéristiques corporelles sur la base desdits points de repère alignés,
former une image de sortie en copiant ladite image d'article transformée sur ledit modèle, ladite image de sortie comportant la visualisation d'une apparence du modèle représentant des caractéristiques corporelles en utilisant l'article, et
sélectionner une ou plusieurs des variations dudit ensemble de produits en vue d'un conseil à l'utilisateur sur la base desdites informations personnelles mémorisées de l'utilisateur, desdites données d'article mémorisées, et de critères prédéterminés pour sélectionner l'article, **caractérisé en ce que** :
l'étape consistant à mémoriser des informations personnelles de l'utilisateur inclut de mémoriser des mesures de taille de l'utilisateur,
lesdites variations de l'article comportent des variations de taille d'un vêtement,
l'étape consistant à mémoriser des données d'article inclut de mémoriser des informations de taille pour chacune des variations de taille du vêtement, les informations de taille comportant des mesures de taille pour des dimensions appropriées d'un corps correspondant le mieux à chacune desdites variations de taille du vêtement,
l'étape consistant à sélectionner un ou plusieurs des articles inclut de sélectionner une ou plusieurs des variations de taille du vêtement en comparant lesdites mesures de taille de l'utilisateur auxdites mesures de taille pour des dimensions appropriées du corps correspondant le mieux à chacune desdites variations de taille du vêtement, et
le procédé comportant en outre l'étape consistant à présenter la ou les variations de taille sélectionnées à l'utilisateur en tant que conseils d'ajustage.

2. Procédé selon la revendication 1, dans lequel l'étape consistant à mémoriser des informations personnelles inclut de mémoriser des informations pour une ou plusieurs des images du corps, la forme et la taille de corps, des caractéristiques personnelles de l'utilisateur et des préférences personnelles de l'utilisateur.

3. Procédé selon la revendication 1 ou la revendication 2, dans lequel l'étape consistant à identifier des points de repère comporte l'identification des coordonnées des points de repère dudit modèle et de ladite image d'article.

4. Procédé selon la revendication 3, dans lequel l'étape consistant à transformer chaque point de repère comporte la création d'une fonction de transformation de coordonnées, le but de celle-ci étant d'aligner les coordonnées de chaque point de repère de l'image d'article sur les coordonnées du point de repère correspondant dudit modèle représentant des caractéristiques corporelles.

5. Procédé selon la revendication 4, dans lequel :
l'étape consistant à mémoriser des données d'article inclut de mémoriser des données pour une image de masque de l'article,
l'étape consistant à transformer ladite image d'article inclut de transformer ladite image de masque de l'article par ladite fonction de transformation de coordonnées, et
l'étape consistant à former une image de sortie inclut de copier ladite image d'article transformée sur ledit modèle en utilisant ladite image de masque transformée de l'article.

6. Procédé selon l'une quelconque des revendications 1 à 5, dans lequel
l'étape consistant à mémoriser des données d'article inclut de mémoriser le poids pour chacune desdites dimensions appropriées du corps correspondant le mieux à chacune desdites variations de taille du vêtement,
l'étape consistant à sélectionner un ou plusieurs des articles inclut en outre les étapes consistant à :
affecter un nombre plus élevé à chaque dimension appropriée pour chaque variation de taille en fonction de la proximité de la mesure de taille correspondante de chacune desdites dimensions appropriées par rapport à une mesure de taille correspondant de l'utilisateur comme déterminé par ladite étape de comparaison,
déterminer un produit du nombre affecté à chacune desdites dimensions appropriées pour chaque variation de taille et le poids affecté à chacune desdites dimensions appropriées, et
déterminer une somme de tous lesdits produits pour toutes les dimensions appropriées pour chaque variation de taille, et
l'étape consistant à présenter la ou les variations de taille sélectionnées à l'utilisateur en tant que conseils d'ajustage inclut en outre de conseiller au moins une variation de taille du vêtement à l'utilisateur sur la base d'une somme la plus élevée pour la au moins une variation de taille comme déterminé par ladite somme de tous lesdits produits.

7. Procédé selon l'une quelconque des revendications 1 à 6, dans lequel
l'étape consistant à mémoriser des informations personnelles de l'utilisateur comporte en outre la mémorisation des préférences personnelles et de l'historique de l'utilisateur, et
l'étape consistant à sélectionner un ou plusieurs des articles comporte en outre la sélection desdits un ou plusieurs articles sur la base des informations personnelles et de l'historique de l'utilisateur.

8. Procédé selon la revendication 7, dans lequel
les préférences personnelles mémorisées et l'historique de l'utilisateur incluent une ou plusieurs des préférences d'ajustage de l'utilisateur et l'historique d'achat de l'utilisateur,
l'étape consistant à mémoriser des informations personnelles de l'utilisateur comporte en outre les étapes consistant à :
modifier lesdites informations d'utilisateur sur la base dudit historique d'achat de l'utilisateur, et
l'étape consistant à mémoriser des données d'article inclut les étapes consistant à :
mémoriser des informations concernant des retours et des ajustages de vêtement, et
corriger lesdites données d'article mémorisées sur la base desdites informations de retour et d'ajustage de vêtement.

9. Système (10) pour visualiser une apparence personnelle et délivrer des conseils d'ajustage et de taille pour des vêtements, le système comportant :
des premiers moyens (16) pour mémoriser des informations personnelles d'un utilisateur du système, lesdites informations personnelles incluant un modèle représentant des caractéristiques corporelles sélectives,
des seconds moyens (18) pour mémoriser des données pour un article d'intérêt pour l'utilisateur, ledit article ayant un ensemble de produits comportant des variations de l'article proposé à l'utilisateur en vue d'une sélection, lesdites données d'article incluant des données d'image de l'article,
des moyens (40) pour identifier des points de repère sur ledit modèle représentant des caractéristiques corporelles et pour identifier des points de repère sur ladite image d'article,
des moyens (42) pour transformer chaque point de repère de ladite image d'article en un point de repère correspondant dudit modèle représentant des caractéristiques corporelles sélectives pour aligner lesdits points de repère de l'image d'article sur les points de repère dudit modèle,
des moyens (42) pour modifier ladite image d'article pour l'ajuster audit modèle représentant des caractéristiques corporelles sur la base desdits points de repère alignés,
des moyens (12) pour former une image de sortie en copiant ladite image d'article transformée sur ledit modèle, ladite image de sortie comportant la visualisation d'une apparence du modèle représentant des caractéristiques corporelles en utilisant l'article, et
des moyens (128) pour sélectionner une ou plusieurs des variations dudit ensemble de produits en vue d'un conseil à l'utilisateur sur la base desdites informations personnelles de l'utilisateur, desdites données d'article, et de critères prédéterminés pour sélectionner l'article, **caractérisé en ce que** :
lesdits premiers moyens servent à mémoriser des mesures de taille de l'utilisateur,
lesdites variations de l'article comportent des variations de taille d'un vêtement,
lesdits seconds moyens servent à mémoriser des informations de taille pour chacune des variations de taille du vêtement, les informations de taille comportant des mesures de taille pour des dimensions appropriées d'un corps correspondant le mieux à chacune desdites variations de taille du vêtement,
lesdits moyens de sélection servent à sélectionner une ou plusieurs des variations de taille du vêtement en comparant lesdites mesures de taille de l'utilisateur auxdites mesures de taille pour des dimensions appropriées du corps correspondant le mieux à chacune desdites variations de taille du vêtement, et
le système comporte en outre des moyens pour présenter la ou les variations de taille sélectionnées à l'utilisateur en tant que conseils d'ajustage.

10. Système (10) selon la revendication 9, dans lequel lesdites informations personnelles incluent des images du corps, la forme et la taille du corps, des caractéristiques personnelles de l'utilisateur et des préférences personnelles de l'utilisateur.

11. Système (10) selon la revendication 9 ou la revendication 10, dans lequel l'article est un vêtement.

12. Système (10) selon la revendication 11, dans lequel
l'article est un vêtement et ledit ensemble de produits comporte des variations de taille du vêtement,
lesdites données d'article incluent des informations de taille comportant des mesures de taille d'un corps correspondant le mieux à chacune desdites variations de taille du vêtement, et
lesdits moyens de sélection (128) servent à effectuer une sélection en appliquant un poids à une comparaison d'informations de taille dudit utilisateur aux mesures de taille correspondantes dudit corps correspondant le mieux.

13. Système (10) selon l'une quelconque des revendications 9 à 12, comportant en outre :
une image de masque de l'article,
des moyens pour transformer ladite image de masque de l'article pour l'ajuster audit modèle représentant des caractéristiques corporelles, et
les moyens de formation d'images de sortie (12) servent à copier ladite image d'article transformée sur ledit modèle en utilisant ladite image de masque transformée de l'article.

14. Système (10) selon l'une quelconque des revendications 9 à 13, comportant en outre des moyens pour accéder au système par l'intermédiaire d'un ou plusieurs dispositifs parmi un ordinateur personnel, un terminal interne, une télévision interactive, un centre d'appels, un dispositif mobile de troisième génération et un dispositif utilisant un protocole d'application sans fil.
